# EUROPEAN PATENT APPLICATION

(11) **EP 4 640 423 A1**
(43) Date of publication of application: **29.10.2025**
(21) Application number: 25171115.6
(22) Date of filing: 16.04.2025
(51) Int. Cl.: B32B 3/02, B32B 7/06, B32B 7/12, B32B 7/14, B32B 15/08, B32B 15/12, B32B 15/20, B32B 27/08, B32B 27/10, B32B 27/30, B32B 27/32, B32B 29/06

(54) **DELAMINABLE LAMINATED PACKAGING MATERIAL, PACKAGING CONTAINER COMPRISING DELAMINABLE LAMINATED PACKAGING MATERIAL, AND METHODS OF MAKING AND RECYCLING THE MATERIAL AND CONTAINER**

(30) Priority: 24.04.2024 EP 24172220
(71) Applicant: Tetra Laval Holdings & Finance S.A., 1009 Pully (CH)
(72) Inventor: ÖHMAN, Peter, 221 86 Lund (SE); EKLUND, Jonas, 221 86 Lund (SE)
(74) Representative: Tetra Pak Patent Attorneys

(57) **Abstract**

The invention relates to a packaging container (30a; 30b; 30c; 30d; 30e), for liquid or semi-liquid food products, comprising a delaminable laminated packaging material (10), the laminated packaging material comprising as layers of a layer sequence:
an outermost protective material layer (16);
a bulk layer (11) of paper or paperboard or other cellulose-based material;
and one or more inner layers (14, 19) including an innermost layer liquid tight material layer (19). A delaminable laminated packaging material and methods of making and recycling the material and container are also described.

## Description

### Technical field

The present invention relates to a packaging container, in particular intended for liquid carton food packaging, formed from a delaminable laminated packaging material comprising a gas barrier layer. The invention further relates to a laminated packaging material (also referred to herein as a "packaging laminate"), to a method of making such a laminated packaging material, to a method of making the packaging container and to a method of recycling the laminated packaging material or container.

### Background of the invention

Packaging containers of the single use disposable type for liquid foods are often produced from a packaging laminate based on paperboard or carton. One such commonly occurring packaging container is marketed under the trademark Tetra Brik Aseptic^{®} and is principally employed for aseptic packaging of liquid foods such as milk, fruit juices etc, sold for long term ambient storage. The packaging material in this known packaging container is typically a laminate comprising a bulk or core layer, of paper, paperboard or other cellulose-based material, and outer, liquid-tight layers of thermoplastics. In order to render the packaging container gas-tight, in particular oxygen gas-tight, for example for the purpose of aseptic packaging and packaging of milk or fruit juice, the laminate in these packaging containers normally comprises at least one additional layer, most commonly an aluminium (Al) foil.

On the inside of the laminate, i.e. the side intended to face the filled food contents of a container produced from the laminate, there is an innermost layer, applied onto the aluminium foil, which innermost, inside layer may be composed of one or several part layers, comprising heat sealable thermoplastic polymers, such as adhesive polymers and/or polyolefins. Also on the outside of the bulk layer, there is an outermost heat sealable polymer layer.

The packaging containers are generally produced by means of modern, high-speed packaging machines of the type that form, fill and seal packages from a web or from prefabricated blanks of packaging material. Packaging containers may thus be produced by reforming a web of the laminated packaging material into a tube by both of the longitudinal edges of the web being united to each other in an overlap joint by welding together the inner- and outermost heat sealable thermoplastic polymer layers. The tube is filled with the intended liquid food product and is thereafter divided into individual packages by repeated transversal seals of the tube at a predetermined distance from each other below the level of the contents in the tube. The packages are separated from the tube by incisions along the transversal seals and are given the desired geometric configuration, normally cuboid shape, by fold formation along prepared crease lines in the packaging material.

The main advantage of this continuous tube-forming, filling and sealing packaging method concept is that the web may be sterilised continuously just before tube-forming, thus providing for the possibility of an aseptic packaging method, i.e. a method wherein the liquid content to be filled as well as the packaging material itself are reduced in bacteria and the filled packaging container is produced under clean conditions such that the filled package may be stored for a long time even at ambient temperature, without the risk of growth of micro-organisms in the filled product. Another important advantage of the Tetra Brik^{®}-type packaging method is, as stated above, the possibility of continuous high-speed packaging, which has considerable impact on cost efficiency.

Packaging containers for sensitive liquid food, for example milk or juice, can also be produced from sheet-like blanks or prefabricated blanks of the laminated packaging material of the invention. From a tubular blank of the packaging laminate that is folded flat, packages are produced by first of all building the blank up to form an open tubular container capsule, of which one open end is closed off by means of folding and heat-sealing of integral end panels. The thus closed container capsule is filled with the food product in question through its open end, which is thereafter closed off by means of further folding and heat-sealing of corresponding integral end panels. An example of a packaging container produced from sheet-like and tubular blanks is the conventional so-called gable-top package. There are also packages of this type which have a moulded top and/or screw cap made of plastic.

A packaging laminate of the above-described type is conventionally produced by a process in which a web of paper or paperboard is united with a prefabricated web of aluminium which, with good adhesive strength, is bonded to the paper or paperboard web, with the aid of a thermoplastic bonding layer (adhesive or binder) which is extruded between the webs. The webs are thereafter coated with thin layers of polyethylene which are extruded on both sides of the webs for the formation of the outer, liquid-tight plastic layers of the packaging laminate. Formation of the laminated packaging material from the web of paper or paperboard is referred to as "conversion".

In recent years, the majority of the producers of food packaging containers are focusing on reaching recyclability and sustainability standards promoted by various governments and other institutions, such as the European Union. The objective of these efforts is to deliver a future carton-based packaging container, made to a larger extent of renewable packaging materials, and being to a higher degree recyclable, in order to reduce waste and pollution.

There is a need to provide alternative barrier materials to aluminium foil to reduce the carbon footprint. Thin barrier coatings on substrates have been developed. Such gas barrier layers are discussed for example in WO2013/041469 and WO2023/186448 of the applicant.

Recycling is also an important consideration. While good integrity and internal adhesive or bonding strength of the packaging laminate are both desirable and necessary to be able to produce packages possessing mechanical strength and configurational stability, these are also important factors when it comes to being able to recycle the individual materials in the used packaging laminate as far as is possible, and being able, by recovering and recycling them in as pure form as possible, to re-use these individual materials. For example, there has long been a need in this art to be able to recycle the fibre content of the packaging laminate (its paper or paperboard fraction), but because of the powerful adhesive bond between the paper or paperboard layer and the adjacent layers, it has proved difficult to separate these layers from one another without a significant loss of fibres which adhere to the plastic after the separation treatment.

WO97/16312 of the applicant discloses a delaminable packaging material wherein paper is adhered to adjacent layers via a water-soluble polymer such as starch or polyvinyl alcohol.

JP2022073824 of Sumimoto discloses a delaminable packaging material comprising a paper part and a laminate part and having a release layer on a face of the paper. The release layer is of butenediol vinyl alcohol copolymer or polyvinyl alcohol.

JP2000128144 of Dai Nippon Printing Co., Ltd. discloses a delaminable packaging material comprising a paper layer and a gas barrier layer joined by hot-melt extrusion of an intermediate bonding layer of **LDPE** or an adhesive resin layer of ethylene methyl methacrylate or other acrylic polymer. The material is partially provided with an adhesive strength adjusting layer in areas of the top and bottom to be heat bonded when forming a gable top container. This allows the heat seals to be easily separated for flattening of the container prior to delamination.

JP2000203564 of Dai Nippon Printing Co., Ltd. discloses a delaminable packaging material comprising a paper layer and a gas barrier layer joined by two release layers e.g. of polyester or urethane resin and ethylene-vinyl acetate copolymer respectively. The release layers are printed onto the gas barrier layer and adhered to the paper layer via extrusion lamination of an adhesive resin layer. Again, the material is partially provided with an adhesive strength adjusting layer in areas of the top and bottom to be heat bonded when forming a gable top container.

There remains a need to realise a packaging laminate which, despite good integrity and good internal cohesion between the individual layers of the packaging laminate, is easy to delaminate by hand and therefore easy to sort for recycling and re-use without excessive material losses. Premature delamination e.g. in the filling machine should be avoided, on the other hand. The fibre content (the paper or paperboard) and the polymer (optionally including aluminium) content of the packaging laminate should be available for reuse in as pure a form as possible.

### Summary of the invention

In a first aspect, the invention relates to a packaging container for liquid or semi-liquid food products, comprising a delaminable laminated packaging material, the laminated packaging material comprising as layers of a layer sequence:
- an outermost protective material layer;
- a bulk layer of paper or paperboard or other cellulose-based material;
- one or more inner layers including an innermost layer liquid tight material layer;
wherein the laminated packaging material includes one or more areas of weak adhesion between the bulk layer and the inner layer(s) for initiation of delamination of the bulk layer from the inner layer(s), and areas of stronger controlled adhesion between the bulk layer and the inner layer(s).

The areas of weak adhesion may be formed either when forming the delaminable laminated packaging material (converting embodiment), or when forming a packaging container from the delaminable laminated packaging material (filling machine embodiment).

The delaminable laminated packaging material may comprise at least one laminated opening hole in which a hole in the bulk layer is covered by the other layers of the laminated packaging material.

In a second aspect, the invention relates to a delaminable laminated packaging material suitable for forming a packaging container for liquid or semi-liquid food products as claimed in any one of the preceding claims, the laminated packaging material comprising as layers of a layer sequence:
- an outermost protective material layer;
- a bulk layer of paper or paperboard or other cellulose-based material;
- one or more inner layers including an innermost layer liquid tight material layer;
wherein the laminated packaging material includes one or more areas of weak adhesion between the bulk layer and the inner layer(s) for initiation of delamination of the bulk layer from the inner layer(s) and areas of stronger controlled adhesion between the bulk layer and the inner layer(s). The packaging container discussed above may comprise such a delaminable packaging material (as in the converting embodiment), but this is not necessarily the case (as in the filling machine embodiment).

According to an embodiment, the packaging container is manufactured at least partly from the delaminable laminated packaging material, and according to a further embodiment it is made in its entirety of the delaminable laminated packaging material.
In a third aspect, the invention relates to a method of making a delaminable laminated packaging material of the second aspect comprising the steps of:
- laminating the bulk layer to at least one inner layer; and
applying the outermost and innermost material layers, and optionally at least one further inner layer.

In a fourth aspect of the invention there is provided a method of making the packaging container.

In a fifth aspect there is provided a method of recycling the packaging material or container, comprising repulping of the delaminable laminated packaging material or a portion thereof.

All features described in connection with any aspect of the invention can be used with any other aspect of the invention.

### Detailed description

By the term "long-term storage", used in connection with the present invention, it is meant that the packaging container should be able to preserve the qualities of the packed food product, i.e. nutritional value, hygienic safety and taste, at ambient conditions for at least 1 or 2 months, such as at least 3 months, preferably longer, such as 6 months, such as 12 months, or more.

By the term "package integrity", is generally meant the package tightness, i.e. the resistance to leakage or breakage of a packaging container. The term encompasses the resistance of the package to intrusion of microbes, such as bacteria, dirt, and other substances, that may deteriorate the filled food product and shorten the expected shelf-life of the package.

One main contribution to the integrity of a package from a laminated packaging material is provided by good internal adhesion between adjacent layers of the laminated material. Another contribution comes from the material resistance to defects, such as pinholes, ruptures, and the like within each material layer itself, and yet another contribution comes from the strength of the sealing joints, by which the material is sealed together at the formation of a packaging container.

The term "liquid or semi-liquid food" generally refers to food products having a flowing content, i.e. including food products having a high viscosity, like sauces, pastes and soups, and such food products that optionally may contain pieces of food. Dairy and milk, soy-, rice-, grain- and seed- drinks or liquids, juice, nectar, still drinks, energy drinks, sport drinks, coffee or tea drinks, coconut water, wine, soups, crushed tomatoes, sauce (such as pasta sauce) and olive oil are some non-limiting example of food products contemplated.

The term "aseptic" in connection with a packaging material and packaging container refers to conditions where microorganisms are eliminated, inactivated or killed. Examples of microorganisms are bacteria and spores. Generally an aseptic process is used when a product is aseptically packed in a packaging container. For the continued asepticity during the shelf-life of the package, the package integrity properties are of course very important. For long-term shelf-life of a filled food product, it may furthermore be important that the package has barrier properties towards gases and vapours, such as towards oxygen gas, in order to keep its original taste and nutritional value, such as for example its vitamin C content.

By the term "bulk layer" is normally meant the thickest layer or the layer containing the most material in a multilayer laminate, i.e. the layer which contributes most to the mechanical properties and the dimensional stability of the laminate and of packaging containers folded from the laminate, such as paperboard or carton.

The term "outer layers" is used herein to refer to layers including the bulk layer and outermost layer, and the term "inner layers" is used to refer to layers including the optional gas barrier layer and inside polymer layer(s) including the innermost layer.

The term "polyethylene" (PE) refers to a polymer comprising ethylene monomers at from about 90 to 100 mol%.

The term "polypropylene" (PP) refers to a homopolymer or co-polymer of PP, e.g. a polymer comprising propylene monomers at from about 90 to 100 mol%.

Low density polyethylene (LDPE) has a density of 917 to 930 kg/m³. It is typically polymerised from ethylene monomers alone and has a branched polymer chain structure (on about 2 % of the carbon atoms), such that its molecules are less tightly packed and less crystalline, and therefore its density is lower than for linear polyethylenes, such as linear low density polyethylene (LLDPE) or high density polyethylene (HDPE).

The term "linear low density polyethylene" (or "LLDPE") covers all linear low density polyethylenes, including "ZN-LLDPE" polymerised by means of Ziegler-Natta type catalysts as well as "m-LLDPE" polymerised by catalysts of so-called "constrained geometry", or "single-site" catalysts, such as "metallocene" catalysts, and other linear low density polyethylenes. Both ZN-LLDPE and m-LLDPE are typically produced by copolymerising an ethylene monomer with a C₄-C₈, more preferably a C₆-C₈, alpha-olefin alkylene monomer, the latter in the presence of a metallocene catalyst. 1 to 10 mol%, suitably 8 to 10 mol%, comonomer content is typical. LLDPE has significant numbers of short branches. It differs structurally from conventional LDPE because of the absence of long chain branching. LLDPE polymer typically has a narrower molecular weight distribution than conventional LDPE (this is true for m-LLDPE especially) and significantly different rheological properties.

High density polyethylene, HDPE, has a density of 930 to 970 kg/m³. Up to 2 mol% comonomer content is typical. The lack of branching is ensured by an appropriate choice of catalyst (e.g. ZN catalysts) and reaction conditions.

The term "ethylene vinyl acetate copolymer" (also referred to as "EVA", "EVAc" and "PEVA") refers to a copolymer of ethylene and vinyl acetate.

The term "dispersion coating" (also called "liquid-film coating") herein relates to a coating technique in which an aqueous or substantially aqueous dispersion, suspension, emulsion or solution of a polymer is applied to the surface of a substrate layer, usually in the form of a continuous web, to form a solid, substantially non-porous film after drying. The term "dispersion" covers thus also any solution, suspension, emulsion or solution or mixes thereof, that would be capable of providing such a coating after drying. The aqueous dispersion may comprise fine polymer particles in suspension or emulsion, and thus be a latex. The term "water-dispersible" includes polymers which are capable of forming aqueous dispersions, and which preferably form coatings which are redispersible in water.

Adhesive strength (also referred to herein as "peeling strength") is measured according to ASTM D903-98 at 180°, using a 15 mm wide strip and a speed of 50 mm/min. Peeling is conducted on the inner layers, with the outer layers being held. Full adhesion typically refers to adhesive strength of at least 60 N/mm. Controlled adhesion (suitable for delamination) typically refers to adhesive strength of 10 to 30 N/mm. Weak adhesion (for initiation of delamination) typically refers to adhesive strength of less than 5 N/mm, preferably less than 1 N/mm.

The term "delaminable" includes laminated packaging materials which are separable into the inner layers and outer layers (as defined above) by hand.

The term "coincide" includes features which partially or completely overlap in area.

"Repulping" refers to mechanical treatment of material in water to provide a pulp comprising fibre content and water, and optionally a coarse reject fraction of non-fibre material.

"Fibre yield" refers to the wt% of the bulk layer which is recovered as fibre content in pulp.

### Bulk Layer

A paper or paperboard bulk layer for use in the invention usually has a thickness of from about 100 µm up to about 600 µm, and a surface weight of approximately 100 to 500 g/m² (gsm), preferably about 200 to 300 g/m², and may be a conventional paper or paperboard of suitable packaging quality. The purpose of the bulk layer in the laminated packaging materials of the present invention is to provide dimensional stability, rigidity and stiffness to packaging containers, e.g. for use in wet and humid conditions and/or for storage of liquids and wet (heavy) food products. For larger packages a paperboard of 400 to 500 µm is preferred. For portion packs of 150 to 350 mL size, a bending stiffness of 80 mN is preferred.

The inner surface of the bulk layer is suitably at least partially coated in use with a releasable adhesive coating as described below. Preferably, the surface is fibrous with no previous coating (e.g. clay coating). The outer surface may be clay-coated, and this may assist with delamination of the outermost layer.

### Releasable Adhesive Coating

The releasable adhesive coating, where present, suitably comprises a water-dispersible polymer selected from ethylene-vinyl acetate copolymer, acrylic copolymer, styrene-butadiene copolymer, polyvinyl alcohol polymer (PVOH) and ethylene-vinyl alcohol copolymer (EVOH). Suitable materials are discussed in European Patent Application No. 24151957.8.

Ethylene-vinyl acetate copolymer is preferred. Preferably, the releasable adhesive coating comprises a majority of EVAc copolymer, and more preferably it essentially comprises EVAc copolymer. In a preferred embodiment, the releasable adhesive coating consists of EVAc copolymer.

Preferably, the ethylene comonomer content of the EVAc copolymer is 35 to 65 mol%, more preferably 45 to 65 mol%.

A preferred grade of EVAc is Aquence BG 9031 from Henkel, Germany.

Suitable acrylic copolymers include ethylene-acrylic copolymers such as ethylene (meth)acrylic acid copolymer and ethylene (meth)acrylate copolymer, as well as styrene-acrylic copolymers.

Where ethylene-vinyl alcohol copolymer (EVOH) is used, preferably it only contains a few mol% of ethylene monomer, e.g. Exceval^{™} dispersion coatable EVOH, from Kuraray.

Preferably, the releasable adhesive coating is present in an amount of 0.5 to 3 g/m², preferably 0.5 to 2.5 g/m² e.g. 1 g/m² or 2 g/m² dry weight. Below 0.5 or 1 g/m² there may be insufficient coverage of the bulk layer surface. Above 3 g/m² coverage is not significantly improved, and costs are increased.

Preferably, the water-dispersible polymer is dispersion coated. It is suitably applied in aqueous form, e.g. in the form of an aqueous emulsion or latex. Suitably, the solids content is 35 to 65 wt%, preferably 40 to 60 wt%, e.g. 55 wt% solids content. An emulsifier such as polyvinyl alcohol (PVOH) may be present to stabilise the emulsion.

As discussed in more detail below under "Method of making laminated packaging material", in one preferred embodiment areas of the bulk layer are not coated with the releasable adhesive coating, so as to provide non-coated areas of weak adhesion. In an alternative embodiment, the bulk layer is fully coated with the releasable adhesive coating and then partially coated with lacquer (or wax), so as to provide lacquer-coated areas of weak adhesion. These are both examples of the converting embodiment.

Suitably, the areas of weak adhesion cover up to 5 % of the overall area of interface between the bulk layer and the inner layer(s), which typically corresponds to the area of the laminated packaging material itself. An example wherein the interface between the bulk layer and the inner layer(s), would not exactly correspond to the area of the laminated packaging material itself is when there would be a pre-cut hole in the bulk layer alone, or in the bulk layer together with further layers of the laminate.

### Gas Barrier Layer

Preferably, the inner layers comprise a gas barrier layer. However, in some embodiments, for example for chilled distribution of milk, this layer may be omitted.

In a first preferred embodiment, the gas barrier layer is an aluminium foil.

In a second preferred embodiment, the gas barrier layer is a multilayer gas barrier layer comprising a barrier substrate (e.g. a barrier substrate film) and a barrier material layer. Suitable materials are discussed in European Patent Application No. 24151957.8.

The barrier substrate preferably comprises polymer, more preferably a polyolefin such as polypropylene or polyethylene. Typical polyolefin films may be made of a majority of PE or PP e.g. HDPE. This is desirable for recycling, as the laminated packaging material typically contains other layers of PE or PP, and also for compatibility with adjacent layers of PE or PP without the need for tie layers of adhesive polymer as discussed below.

Alternative possible polymers are polyesters (e.g. polyethylene terephthalate, PET) and polyamide (PA). However, these may require the use of tie layers of adhesive polymer for compatibility with adjacent layers comprising polyolefin, as discussed below.

The polymer barrier substrate film may be unoriented but is preferably mono-axially oriented (MO) or biaxially oriented (BO). Preferred barrier substrate film materials include MO polyethylene (MOPE), BO polyethylene (BOPE) and BO polypropylene (BOPP).

Suitably, the thickness of the barrier substrate is 10 to 30 µm, more preferably 15 to 25 µm, e.g. 20 µm.

The barrier substrate film may be a multilayer film and may comprise core and skin layers. EVOH (e.g. containing 30 to 40 mol% ethylene) or polyamide may be used as a further gas barrier layer in the multilayer barrier substrate film.

Suitably, the barrier substrate film is provided with a relatively much thinner skin layer of a vinyl alcohol based polymer (such as EVOH or PVOH) or polyamide, which may also be oriented. The skin layer is preferably applied by co-extrusion with the core layer but may alternatively be dispersion coated on the core layer. Such films are referred to as "high surface energy" (HSE) films as the skin layer enables good bonding of a further gas barrier material layer. The skin layer also typically provides some oxygen gas barrier properties.

The barrier material layer is preferably a vapour-deposited, dispersion-coated or liquid film-coated coating layer.

Thin vapour-deposited layers are normally merely nanometer-thick, i.e. have a thickness in the order of magnitude of nanometers, for example of from 1 to 500 nm (10 to 5000 Å), preferably from 1 to 200 nm, more preferably from 1 to 100 nm and most preferably from 1 to 50 nm.

In a preferred embodiment, the barrier material layer comprises metal, metal oxide, silicon oxide, amorphous carbon or diamond-like carbon (DLC) and is preferably vapour-deposited. Such barrier material layers typically provide barrier properties against both oxygen and water vapour. Preferred such barrier materials are aluminium, aluminium oxide and silicon oxide.

Vapour-deposited metal layers (also referred to herein as "metallised layers") are preferred. Generally, oxide coatings are more brittle than metallised coatings and less suitable for incorporation into packaging materials by lamination. Metallised layers typically do have suitable mechanical properties for lamination, but generally provide a lower barrier to oxygen gas. A suitable optical density is at least 1.5, preferably at least 1.8.

The vapour-deposited barrier material layer is preferably applied by means of physical vapour deposition (PVD) or chemical vapour deposition (CVD), for example by plasma enhanced chemical vapour deposition (PECVD). PVD is typically used for metallised layers and is also applicable to metal oxide and silicon oxide layers. Normally, an aluminium metallised layer inherently has a thin surface portion consisting of an aluminium oxide due to the nature of the metallisation coating process used. Silicon oxide and DLC coatings may, for example, be applied by a PECVD process.

Preferred embodiments of the gas barrier layer are aluminium metallised BOPP (met-BOPP) and aluminium metallised oriented polyethylene (metOPE).

Where the gas barrier layer comprises a barrier substrate and a barrier material layer, it may be arranged in the laminated packaging material either with the barrier material layer directed towards the bulk layer (CFL, coating facing laminate) or with the barrier layer directed towards the innermost layer (CFI, coating facing inwards). CFL is preferred, particularly where the barrier substrate comprises polyolefin, for compatibility with the innermost layer.

In a third preferred embodiment, the gas barrier layer comprises a layer of gas barrier polymer e.g. PA or EVOH. This may be in the form of a premanufactured film, or a co-extruded layer together with a tie layer of suitable adhesive polymer as discussed below, preferably on both sides. A five-layer co-extruded inner layer structure such as intermediate bonding layer/tie/EVOH/tie/innermost layer is possible.

### Intermediate Bonding Layer

The inner layers, optionally comprising a gas barrier layer, are suitably bonded to the bulk layer via a releasable adhesive coating as described above.

In an embodiment, however, the adhesion between the bulk layer and the inner layers is instead, or further, controlled by a melt extruded layer of an intermediate bonding layer, preferably of thermoplastic polymer, applied between the bulk layer and the inner layers, or between the releasable coating and the inner layers, respectively. The adhesion of the releasable coating and/or the intermediate bonding layer is adjusted to a controlled lower level, such that the laminate packaging material becomes delaminable.

According to an embodiment the intermediate bonding layer comprises polyolefin e.g. PE or PP. The same thermoplastic polyolefin-based materials as listed below for the outermost and innermost layers, and in particular polyethylenes e.g. LDPE, are also suitable for the intermediate bonding layer. In a preferred embodiment, the intermediate bonding layer consists of LDPE.

The intermediate bonding layer may typically be applied at a total amount from 10 to 25 µm, or 12 to 25 g/m², preferably 15 to 23 g/m², e.g. 15 g/m².

### Other Layers of Laminated Packaging Material

The outer- and innermost layers of thermoplastic polymers do not normally add recognizable barrier properties to migrating gas molecules or small molecules. Their purpose is to provide a direct barrier to water or other liquids from penetrating through to the cellulose-based bulk material and other sensitive layers and to act as an aseptic barrier, maintaining package integrity to protect the filled contents inside the package, as well as preferably being heat sealable.

The outermost layer may be a layer or coating of a protective polymer, to prevent dirt and moisture from reaching the interior of the laminated material, such as a polymer layer, such as a thermoplastic polymer layer. Preferably, this layer is liquid-tight.

Suitable thermoplastics for the outer- and innermost layers are polyolefins such as polyethylene homo- or co-polymers, preferably polyethylenes selected from the group consisting of LDPE, LLDPE, m-LLDPE and blends or copolymers thereof. According to an embodiment, the outermost layer is of LDPE, while the innermost layer is a blend composition of m-LLDPE and LDPE (also referred to herein as "mPE") for optimal lamination and heat sealing properties. In a preferred embodiment, the innermost layer comprises 50 to 90 wt% mLLDPE and 10 to 50 wt% LDPE, for example 70 wt% mLLDPE and 30 wt% LDPE. However, lower proportions of mLLDPE such as 10 to 50 wt% e.g. 30 wt% in such blends are also envisaged. A suitable LDPE grade is 19N730 from Ineos. A suitable blended grade of mLLDPE and LDPE is Elite 5800G from Dow.

The outermost layer is preferably transparent. In this way, any printed décor pattern applied onto the outside of the bulk layer can be seen. This is useful in informing viewers e.g. about the contents of the package, the packaging brand and other consumer information relevant in retail facilities and/or food shops.

The outermost layer is typically applied at a thickness of from 5 to 20 µm, such as from 10 to 15 µm, or 5 to 15 g/m², such as from 8 to 15 g/m².

The inside polymer layer(s) may be applied at total thicknesses ranging from 10 to 55 µm, or in an amount of 10 to 55 g/m², such as 15 to 45 g/m². These ranges are particularly suitable for family packs, whereas for portion packs 30 to 40 g/m² may be suitable.

These inside polymer layers may comprise two or more sub-layers which may be of different compositions. The inside polymer layers comprise specifically at least the innermost liquid-tight, heat sealable material layer referred to above. The term "innermost layer" as used herein may thus refer to a sub-layer of the inside polymer layers, in the innermost position to be in contact with the filled food product. An interjacent layer may be adjacent to the innermost layer.

The innermost layer typically provides heat seal properties by melting and being thermowelded across the whole sealing zone; the interjacent layer if present may also take part in heat sealing, e.g. by melting and being thermowelded in part of the sealing zone.

An adhesive layer (also referred to as a "tie layer") may be provided as part of the inside polymer layers, adjacent to the gas barrier layer if present. The adhesive layer polymer should preferably not participate in the heat sealing but stay put in place. Suitable materials for the adhesive layer polymer are as for the intermediate bonding layer adhesive polymers discussed above. Tie layers are typically applied at a thickness of from 3 to 8 g/m².

The outermost and/or innermost layers are preferably applied by extrusion coating. The tie layer may be co-extruded with other inside polymer layers. However, the innermost layer may be applied in the form of a premanufactured oriented or non-oriented film.

In an alternative preferred embodiment, the outermost layer can be dispersion coated at a lower amount (e.g. 3 to 8 g/m², such as 4 to 8 g/m²,dry weight) to provide a coating which is protective rather than strongly liquid-tight. This assists recyclability by lowering the polymer content of the outer layers.

As mentioned above, tie layers may be present in the interior of the laminated packaging material, in particular between the intermediate bonding layer and gas barrier layer and/or between the gas barrier layer and innermost layer. Such tie layers may comprise adhesive thermoplastic polymers, such as modified polyolefins, which are mostly based on LDPE or LLDPE co-polymers or graft co-polymers with functional-group containing monomer units, such as carboxylic or glycidyl functional groups, e.g. (meth)acrylic acid monomers or maleic anhydride (MAH) monomers, (i.e. EAA or ethylene methacrylic acid copolymer (EMAA)), ethylene-glycidyl(meth)acrylate copolymer (EG(M)A) or MAH-grafted polyethylene (MAH-g-PE). Other examples of such modified polymers or adhesive polymers are so called ionomers or ionomer polymers. A preferred EEA tie layer material is Primacor 3540 from SK Group, Korea.

In particular, the innermost layer may be bonded to the gas barrier layer via a tie layer e.g. of adhesive polymer such as ethylene acrylic acid copolymer (EAA), which is preferably co-extruded with the innermost layer. This is applicable especially to gas barrier layers of aluminium foil or gas barrier polymer. However, it may also be applicable to multilayer gas barrier layers where the material directed towards the innermost layer is not compatible with the innermost layer. For example, a tie layer of mLLDPE may be used to bond a barrier substrate of BOPP to the innermost layer, as discussed in WO2023/186448.

Tie layers are typically applied at a thickness of from 3 to 8 g/m².

### Method of Making Laminated Packaging Material

The method of making the delaminable laminated packaging material suitably comprises lamination of the bulk layer to at least one inner layer, preferably the gas barrier layer, and applying the outermost layer and innermost material layers. Lamination of the bulk layer to the inner layer(s) may be to the bulk layer directly, or indirectly via one or more other layers. Lamination of the bulk layer to the inner layer(s) is preferably via application of an intermediate bonding layer, as explained above.

Optionally, the method further comprises an initial step of at least partially coating the inner surface of the bulk layer with an aqueous dispersion or solution to form the dried releasable adhesive coating. A drying step may be carried out. In an alternative embodiment, the method comprises initial steps of coating the inner surface of the bulk layer with an aqueous dispersion or solution to form the dried releasable adhesive coating, followed by at least partially coating the releasable adhesive coating with a lacquer coating. Again, drying steps may be carried out.

Partial coating is suitably carried out by printing methods, such as flexographic or gravure printing methods.

In the converting embodiment, lamination of the bulk layer to the inner layer(s) is preferably via the releasable adhesive coating and optionally also via the lacquer coating on the bulk layer. The releasable adhesive coating and/or lacquer coating is suitably partial to give areas of weak adhesion.

By contrast, in the filling machine embodiment, no areas of weak adhesion need be formed when making the delaminable laminated packaging material. Instead, it has throughout the full area of the laminated layers the same delaminable, controlled level of sufficient adhesion.

The method may further comprise steps of printing, creasing, perforation and or cutting the bulk layer after coating of its inner surface and before lamination of the releasable adhesive coating to the inner layer(s). These steps can also be carried out before coating of the bulk layer inner surface. Décor printing is preferably conducted before the other steps, including coating.

The intermediate bonding layer suitably bonds the bulk layer to the inner layer(s) by melt extrusion lamination between a web of the optionally coated bulk layer and a web of the inner layer(s), and simultaneously pressing the three layers together while being forwarded through a lamination roller nip, thus providing a laminated structure.

The lamination temperature (i.e. extrusion melt temperature of the melt curtain) can be adjusted to achieve the desired level of adhesion between the releasable adhesive coating and the intermediate bonding layer. Generally, the temperature will be 10-15 °C lower than typically used for lamination with an intermediate bonding layer at the respective speed of the lamination line (e.g. 311 °C for LDPE), so that adhesion is reduced. Preferably, particularly where the intermediate bonding layer is of LDPE, the lamination temperature is 310 °C or less. Preferably, it is at least 290 °C.

In a preferred embodiment, the bulk layer and gas barrier layer are laminated, followed by application of the innermost layer and then the outermost layer (or less preferably followed by application of the outermost layer and then the innermost layer). The former order is referred to as "LID" wherein L= lamination of bulk layer to gas barrier layer; I = application of innermost layer/inside polymer layers to gas barrier layer; D (décor) = application of outermost layer onto bulk layer. The latter less preferred alternative is referred to as "LDI". Alternatively, the bulk layer may be initially joined to the outermost layer before lamination to the gas barrier layer. This order is referred to as "DLI".

### Packaging Container

Various possible shapes of container are indicated, as discussed in more detail below.

In the packaging container, the area(s) of weak adhesion may coincide with one or more other features of the container.

In a preferred embodiment, the area(s) of weak adhesion coincide with an edge and/or corner of the laminated packaging material. Suitably, each area includes part or all of an edge and optionally includes a corner.

For example, where the packaging container includes a longitudinal seal, the area(s) of weak adhesion may coincide with the longitudinal seal edge. Alternatively or additionally, where the packaging container includes a top and/or bottom seal, the area(s) of weak adhesion may coincide with the top and/or bottom seal edge. The top and/or bottom seal may be a transverse seal.

In an alternative embodiment, the packaging container includes at least one flap seal and the area(s) of weak adhesion coincide with the flap seal(s).

Preferably, the area(s) of weak adhesion are covered by a flat-folded flap of a corner fold or by a down-folded fin of a transversal seal. For example, an area of weak adhesion may be positioned on the underside of a flat-folded corner flap, which is sealed to a side panel or to the bottom of the container. The side panels are the uncreased and unfolded areas of the package walls that lie between the top and bottom areas and the longitudinal crease lines. On packages having a protruding fin from a bottom or top transversal seal, an area of weak or no adhesion may be placed on the respective fin, at the location of the crossing with the longitudinal seal. For example, on packages having a reversed fin, such that the crossing with the longitudinal seal is hidden beneath the down-folded fin, the area of weak or no adhesion may be located beneath the fin ("reverse fin" embodiment). The area of weak adhesion is protected by the folded fin from unwanted delamination but can be delaminated on lifting the fin.

In a further embodiment, the area(s) of weak adhesion coincide with one or more weaknesses in the laminated packaging material. The weakness may for example be a perforation, cut or crease.

In a yet further embodiment, the area(s) of weak adhesion coincide with one or more discontinuities in an edge of the laminated packaging material. The discontinuity may for example be a tab or notch. However, providing a discontinuity at a transverse seal edge of a form-fill-seal packaging may require a shaped cutting tool, so is not preferred.

Preferably in all embodiments, the area(s) of weak adhesion are each substantially triangular, rectangular, circular, elliptical, semi-circular, semi-elliptical, quarter-circular and/or quarter-elliptical in shape; corners of the shapes may be rounded. Quarter-circular/elliptical areas are particularly suitable at a corner of the laminated packaging material, and semi-circular/elliptical areas are particularly suitable at an edge.

Suitably, two or more areas of weak adhesion are present in the packaging container. This allows delamination to be initiated in two or more separate areas of the container, providing a back-up if delamination fails at one area.

Each area of weak adhesion should be smaller than a panel of the container in size. The size of the weak adhesion area is determined by the package size and the area shape, but should be large enough so that a consumer can start peeling with a finger or fingernail, such as having a width or diameter from 10 to 20 mm.

Suitably, the area(s) of weak adhesion are in register with other features of the container, whether or not they coincide. Such features may include printing and holes. Printing may be used to indicate to the consumer an area of weak adhesion for delamination and/or delamination instructions.

### Method of Making Packaging Container

The packaging container may be made from a web of the delaminable laminated packaging material or from blanks of the delaminable laminated packaging material, again as discussed in more detail below.

In the filling machine embodiment, areas of the laminated packaging material are suitably treated during formation of the packaging container to form areas of weak adhesion, preferably after filling and sealing, but suitably before formation of the final packaging container shape. Heat treatment (e.g. with hot air) may be used to form such local areas by blistering. The areas may be delaminated by the treatment. However, this embodiment is less preferred as it requires modification of the filling machine, and may require treatment of an area of laminated packaging material which is difficult to access during formation of the container. Moreover, the packaging material is typically heat treated in the aseptic area at a temperature of up to 90 °C, so there must be controlled adhesion to avoid extensive delamination in the filling machine.

According to a further embodiment, the packaging container formed from the laminated packaging material may be partly sealed, filled with liquid or semi-liquid food and subsequently sealed, by sealing of the packaging material to itself, optionally in combination with a plastic opening or top part of the package. Induction heating sealing is preferred for laminated packaging materials containing aluminium foil barrier layers or other suitable materials. Ultrasonic heat sealing and hot air sealing are alternative possibilities.

### Delamination

The delaminable laminated packaging material is preferably intended for delamination by hand by a consumer to separate the outer layers (including the bulk layer) from the inner layers (including the gas barrier layer if present). Delamination is initiated, typically with a finger and thumb or with a fingernail, at an area of weak adhesion as described above. Propagating delamination across a seal may require some force by the consumer.

Delamination typically occurs at the releasable adhesive coating, where present.

Typically, delamination will be carried out on a packaging container after use, in preparation for recycling. The inner layers can be sent directly to the polymer/polyolefin recycling stream e.g. via a polymer recycling bin.

The container may be flattened before delamination. Perforations or creases may assist with folding for flattening.

### Recycling of Laminated Packaging Material or Packaging Container

In a further embodiment, the invention relates to a method of recycling a delaminable laminated packaging material or a packaging container as described above, comprising repulping of the laminated packaging material or a portion thereof. Repulping of packaging containers typically takes more time to achieve a given fibre yield than repulping of flat laminated packaging material.

Repulping is preferably carried out only on the outer layers (including the bulk layer) following delamination but may be carried out on the full laminated packaging material also including the inner layers, with no initial delamination. Repulping may be carried without dry cutting (also referred to as shredding or comminution) of the laminated packaging material. This is particularly desirable for non-delaminated material e.g. packaging containers, to reduce fragmentation of the inner layers which may lead to this material being retained in the fibre pulp; reduced fragmentation of the outermost layer is also desirable for the same reason. Suitably, 15 wt% of dry packaging containers are mixed with water.

Alternatively, the laminated packaging material or outer layers thereof may be first dry cut into small pieces or strips.

The material to be repulped is suitably fed into a conventional pulper and mechanically processed by agitation in hot water at 40-60 °C. This releases and redisperses the layer of releasable adhesive coating, if present, so that the fibres are separated from the inner layers, if present, without fibres adhering to and accompanying the plastic surface. The outermost layer will also separate from the fibres, although separation may be less complete where there is no releasable adhesive coating. The fibres and water form a pulp. The pulp can be physically separated from the "coarse reject" fraction of the outermost layer and the inner layer(s) (if present).

In preferred embodiments, the fibre yield after 30 minutes of repulping is at least 97 wt%, more preferably at least 99 wt%. These fibre yields may be reached after 20 minutes, or after 15 or 10 minutes.

### Description of preferred embodiments

In the following, preferred embodiments of the invention will be described with reference to the drawings, in which:
Fig. 1a and Fig 1b each schematically illustrates a cross-section of a delaminable laminated packaging material including an aluminium foil gas barrier layer, according to an embodiment of the present invention.
Figs. 2a-c schematically illustrate a method of producing the laminated packaging material of Fig. 1a or 1b.
Fig. 3a-e show typical examples of liquid carton packaging containers produced from the laminated packaging materials of Fig. 1a or 1b.
Fig. 4 shows the principle of how such liquid carton packaging containers are manufactured from the laminated packaging materials in a continuous, roll-fed, form, fill and seal process.
Fig. 5 schematically illustrates delamination of the laminated packaging material of Fig. 1a or 1b by a consumer.
Fig. 6 shows a schematic plan view of a web of the laminated packaging material of Fig. 1a.
Fig. 7a-e show brick-shaped containers of the Fig. 3a or Fig. 4 type provided with areas of weak adhesion at top and bottom corners of the laminated packaging material. Fig. 7a is a standard container; Fig. 7b is a reversed fin container. Figs 7c-e respectively show the steps of lifting the top flaps of the container of Fig. 7b, flattening the container and delamination.
Fig. 8 shows a variant container design to that of Fig. 7, including a notch in the transverse seal edge.
Fig. 9a-d shows plan views of laminated packaging material corresponding to the creased top parts of each of three further variant container designs, with different positions for the area(s) of weak adhesion adjacent to the top edge.
Figs. 10a-c show further variant container designs, with different positions for the area(s) of weak adhesion at the longitudinal edge in Figs. 10a and 10c.
Fig. 10b shows delamination of the flattened container of Fig. 10a.
Fig. 11a-d show the steps of lifting the top flap, flattening the container and delamination for a variant container design with an area of weak adhesion at the top flap seal.
Fig. 11e-f show how area(s) of weak adhesion can be placed under the bottom flap as well.
Fig. 12a-b shows a gable-top container of the Fig. 3c type with an area of weak adhesion at the longitudinal edge.
Fig. 13a-c shows a Tetra Gemina^{®} container of the Fig. 3d type with an area of weak adhesion under the folded top flaps.
Fig. 14a-d shows a Tetra Top^{®} container of the Fig. 3e type with an area of weak adhesion at the longitudinal edge alternatively an area under the bottom flap.

### Example

An example delaminable laminated packaging material is prepared with the structure of outermost layer / bulk layer / partially coated releasable adhesive coating / intermediate bonding layer / gas barrier layer / tie layer / innermost layer as follows: 12 gsm LDPE / paperboard / 2 gsm EVAc coated on paperboard / 20 gsm LDPE / 6.3 µm Al foil / 6 gsm EAA 19 gsm blend of 70 wt% mLLDPE and 30 wt% LDPE

The paperboard bulk layer is CLC/C Duplex paperboard BK from Billerud, Sweden of bending stiffness 80 mN and basis weight 200 g/m², clay-coated on the outer surface only and with an uncoated fibrous inner surface.

The EVAc in the releasable adhesive coating is Aquence BG9031 from Henkel, Germany (ready mixed aqueous emulsion with 55 wt% solids content).

The LDPE in the outermost layer and intermediate bonding layer is 19N730 from Ineos.

The mPE blend in the innermost layer is Elite 5800G from Dow.

The EAA in the tie layer is Primacor 3540 from SK Group, Korea.

The laminated packaging material is formed as follows.

The EVAc emulsion is partially dispersion coated by gravure coating on the non-clay coated fibrous inner surface of the paperboard, dried with a hot air convection dryer and wound onto a reel. Small uncoated areas are left.

The EVAc-coated paperboard web is unwound, printed on its outer surface and provided with creasing lines for subsequent folding in register with the thus printed décor, and again wound onto a reel.

LID lamination is conducted. Thus, the EVAc-coated paperboard is laminated to the Al-foil with LDPE at a melt curtain temperature of about 303 °C at 100 m/min. The tie layer and innermost layer are co-extruded onto the inner surface of the Al foil, and the outermost layer is then extruded onto the outer surface of the paperboard.

When the laminated packaging material is delaminated by hand, delamination is easily initiated at the uncoated areas, and no fibre remains on the inner layers.

Further, relating to the attached figures:

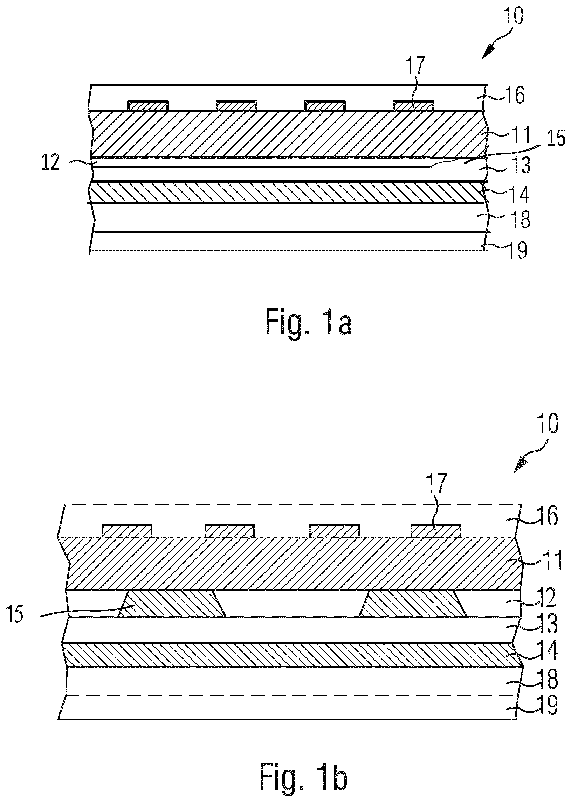

In Fig. 1a and 1b, a laminated packaging material 10 for liquid carton packaging is shown in cross-section, in which the laminated packaging material comprises a paperboard bulk layer 11, having a bending force of 80 mN and a grammage weight of about 200 g/m². The bulk layer 11 is clay-coated on its outer surface and has an uncoated fibrous inner surface. The laminated packaging material 10 further comprises an outer liquid-tight and heat-sealable layer 16 of polyolefin applied on the outside of the bulk layer 11, which side is to be directed towards the outside of a packaging container produced from the laminated packaging material. The layer 16 is transparent to show the printed décor pattern 17, applied onto the outside of the bulk layer of paperboard.

The polyolefin of the outer layer 16 is a conventional low density polyethylene (LDPE) of a heat sealable quality, but could also include further similar polymers, including LLDPEs. It is applied at an amount of about 12 g/m².

The bulk layer 11 is coated on its fibrous inner surface with a dispersion-coated releasable adhesive coating 12 of ethylene-vinyl acetate copolymer. The partial releasable adhesive coating 12 is applied at an amount of about 2 g/m² (dry weight) to leave at least one non-coated area 15, thus obtaining weak adhesion for initiating delamination of the material. In Fig. 1a the area of weak adhesion is a single area located at a material edge or corner or seal. In Fig. 1b there is more than one area of weak adhesion to facilitate delamination better (the depicted layers having different thicknesses between Fig. 1a and 1b provides no technically significant difference, and normal variations of various layer thicknesses for liquid carton laminates apply).

The releasable adhesive coating 12 is bonded via an intermediate bonding layer of LDPE 13 to a barrier layer 14 of 6.3 µm thick aluminium foil. The intermediate bonding layer is applied at an amount of about 20 g/m².

The barrier layer 14 on its inner side is bonded to an innermost layer 19 via a co-extruded tie layer 18 of EAA applied in an amount of about 6 g/m², these layers 18 and 19 together constituting the inside polymer layers, and together with barrier layer 14 constituting the inner layers.

The innermost liquid-tight and heat-sealable layer 19 is arranged to be directed towards the inside of a packaging container produced from the laminated packaging material, i.e. the layer 19 will be in direct contact with the packaged product. This innermost layer 19, which is to form strong transversal heat seals of a liquid packaging container made from the laminated packaging material, comprises a blend of LDPE and m-LLDPE. It is applied at an amount of about 19 g/m².

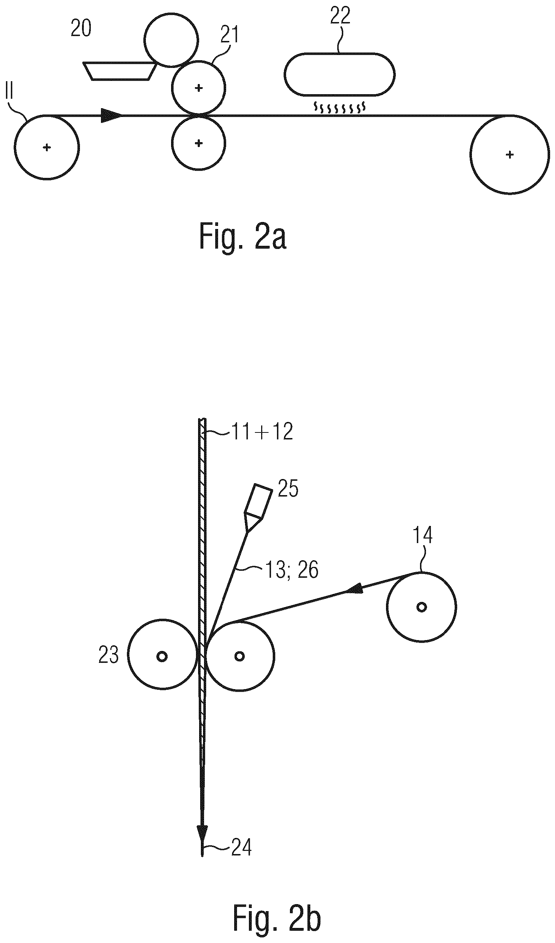

Fig. 2a shows a part of the process for manufacturing of the laminated packaging material 10 of Fig. 1a or 1b, in which the bulk layer 11 is partially dispersion coated with the releasable adhesive coating 12. This step may be conducted at a paperboard supplier's site. A web 11 of paper or paperboard is led in the direction of the arrow from a magazine reel to the left in Fig. 2a to a dispersion coating station at 20 at which one side of the web 11 is, using conventional roller flexo coating apparatus 21, coated with a thin layer of an aqueous emulsion of ethylene-vinyl acetate copolymer having a solids content of 55 %. Non-coated areas (not shown) are provided.

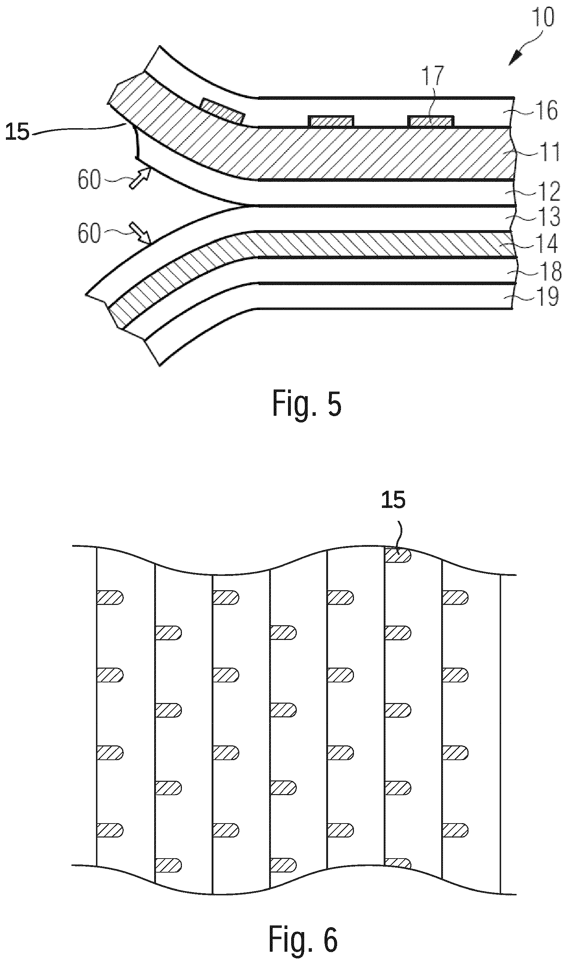

More detail of the pattern of partial coating is shown in Fig. 6. The figure shows a wide web of laminated packaging material, comprising several "package lanes", each package lane corresponding to the width of one package and to the width of one slitted reel of packaging material to feed into a roll-fed filling machine. There is one non-coated area 15 per package, shown in hatching, and these are accordingly separated by one package print length in the machine direction of the web, and one package print width in the cross-direction of the web.

Since the dispersion composition has a high aqueous content, there will be a lot of water on the coated bulk layer web 11 that needs to be dried by heat, and evaporated off, to form a continuous layer. The drying is carried out by a hot air convection dryer 22, which allows the moisture to evaporate and be removed from the substrate surface by air convection. The substrate temperature as it travels through the dryer is kept constant at a temperature of from 60 to 80 °C. Alternatively, particularly at high speeds, drying may be partly assisted by irradiation heat from infrared IR-lamps, in combination with hot air convection drying.

Optionally, the coated bulk layer web 11 may enter a conversion line for printing, creasing, perforation and/or cutting (these steps are not shown). Printing is in register with the non-coated areas.

Fig. 2b shows a further part of the process for the lamination steps in the manufacturing of the laminated packaging material 10 of Fig. 1a or 1b, in which the coated bulk layer 11 is laminated to the gas barrier layer 14.

The releasable adhesive coating 12 of the bulk layer 11 is laminated to the gas barrier layer 14 by the intermediate bonding layer 13 of LDPE. The intermediate bonding layer 13 is formed by melt extrusion of a thin polymer melt curtain 26 from a die 25 between the webs comprising the releasable adhesive coating 12 and the gas barrier layer 14, respectively, and thus laminating the bulk layer 11 and gas barrier layer 14 to each other, as all three layers pass through a nip 23 between a press roller and a chilled roller, cooling the laminated material 24 to properly solidify the extruded intermediate bonding layer 13 of LDPE. The lamination temperature is about 300 °C.

The resulting pre-laminate 24 contains areas of weak adhesion (not shown) corresponding to the non-coated areas. The pre-laminate 24 is forwarded to be wound up on a reel for intermediate storage, or directly to subsequent lamination operations.

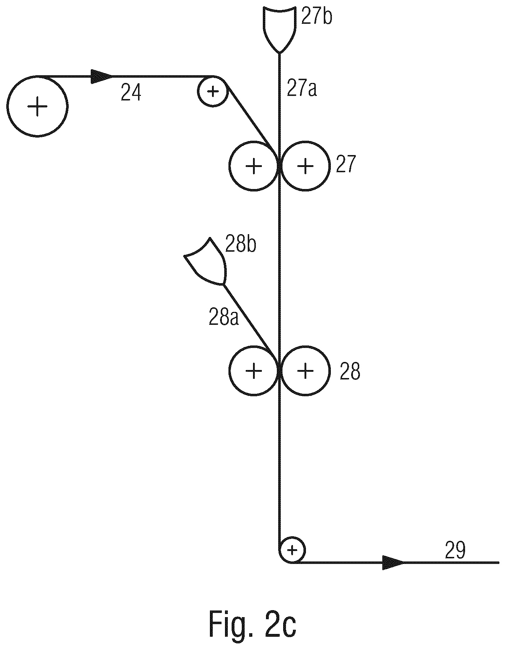

In Fig. 2c, the resulting web of pre-laminate 24 of bulk layer 11 and gas barrier layer 14 is forwarded to further lamination steps, either directly from the lamination operation of Fig. 2b, or from engaging and unwinding from an intermediate storage reel.

The uncoated, inner side of the gas barrier layer 14, is joined at a cooled roller nip 27 to a molten polymer curtain 27a of the tie layer 18 and innermost layer 19 which are co-extruded from an extruder feedblock and die 27b.

Subsequently, the pre-laminate 24, now having the tie layer 18 and innermost layer 19 coated on its inner side, passes a second extruder feedblock and die 28b and a lamination nip 28, where a molten polymer curtain 28a of the LDPE which is to form the outermost layer 16 of the laminated packaging material 10 is joined and coated onto the other side of the pre-laminate, i.e. on the non-laminated print side of the bulk layer 11. This forms the finished laminated packaging material 29; 10, which is finally wound onto a storage reel, not shown. This order of steps is LID. These two coextrusion steps at lamination roller nips 27 and 28, may alternatively be performed as two consecutive steps in the opposite order (LDI), and may be performed before or after lamination of the two webs at lamination roller nip 23 as shown in Fig. 2b (DIL or IDL).

The bulk layer 11 may be provided with holes (not shown) which are overlaminated by the other layers of the laminated packaging material 10 to form pre-laminated holes.

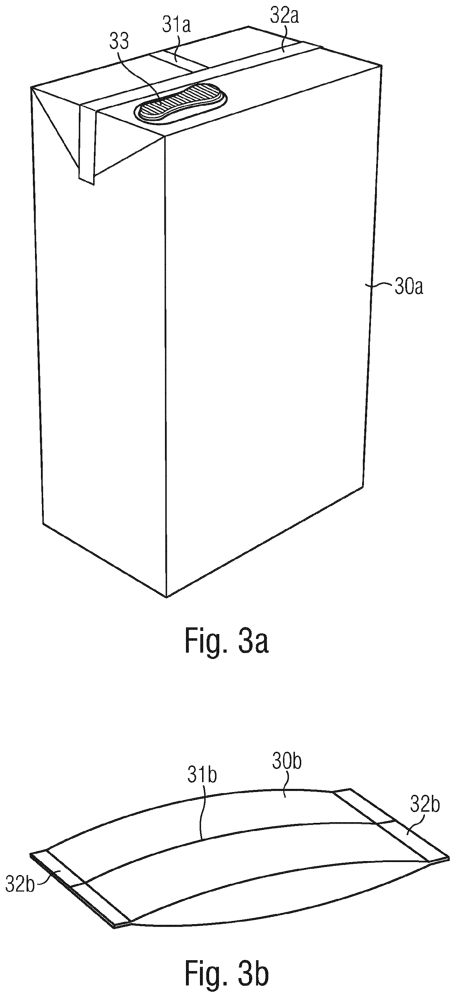

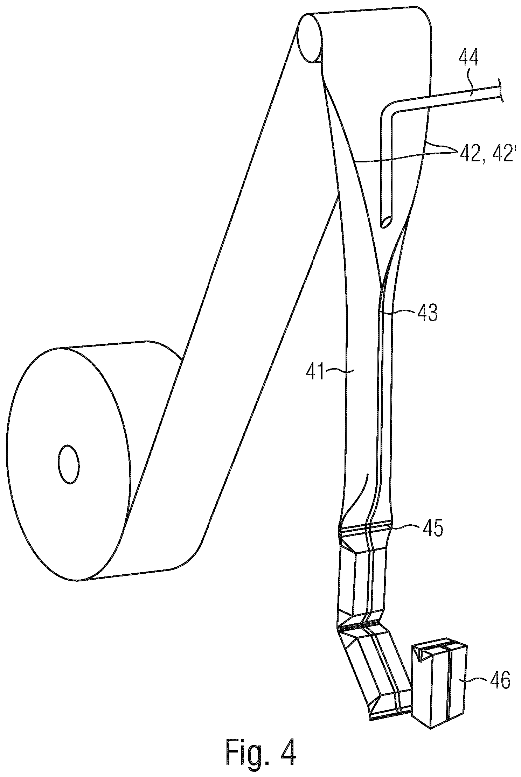

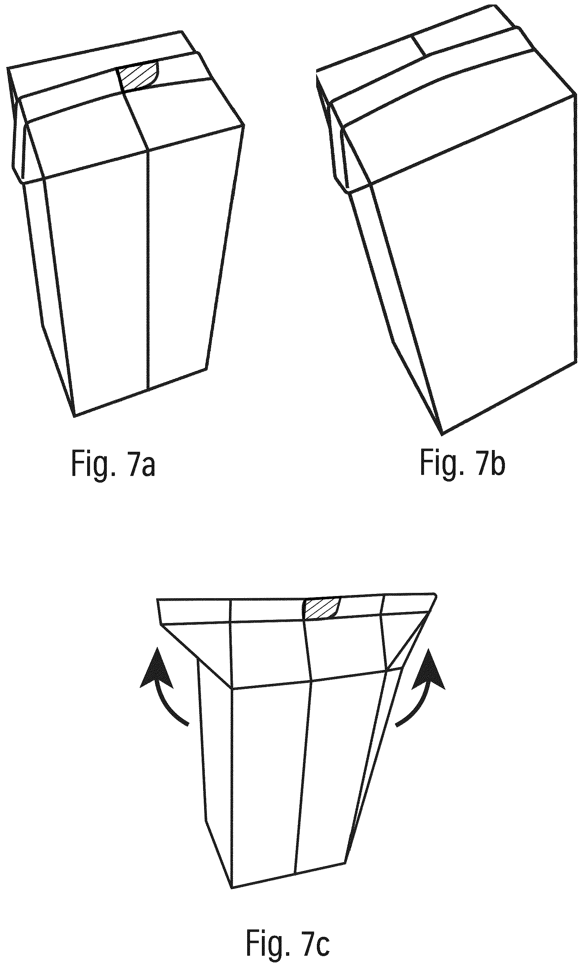

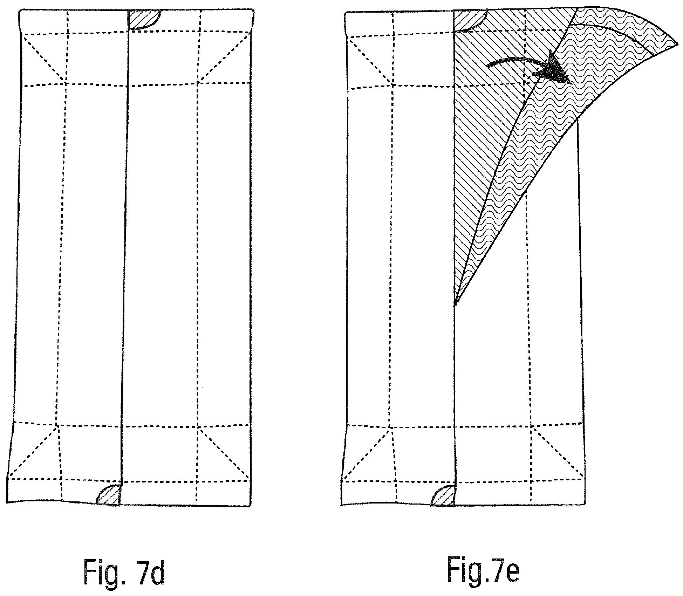

Container shapes which can be produced from a laminated packaging material 10 according to the invention are discussed with reference to Figs. 3a-d and 4; details of the arrangement of areas of weak adhesion for such containers are discussed with reference to Figs. 7 to 14.

Accordingly, Fig. 3a shows an embodiment of a packaging container 30a produced from a laminated packaging material 10 according to the invention. The packaging container is particularly suitable for beverages, sauces, soups or the like. Typically, such a package has a volume of about 100 to 1000 mL. It may be of any configuration, but is preferably brick-shaped, having longitudinal and transversal seals 31a and 32a, respectively, and optionally an opening device 33 over a pre-laminated hole (not shown). In another embodiment, not shown, the packaging container may be shaped as a wedge. In order to obtain such a "wedge-shape", only the bottom part of the package is fold formed such that the transversal heat seal of the bottom is hidden under the triangular corner flaps, which are folded and sealed against the bottom of the package. The top section transversal seal is left unfolded. In this way the only partly folded packaging container is still easy to handle and dimensionally stable enough to put on a shelf in the food store or on any flat surface.

Fig. 3b shows an alternative example of a packaging container 30b produced from an alternative laminated packaging material 10 according to the invention. The alternative laminated packaging material is thinner by having a thinner paper bulk layer, and thus it is not dimensionally stable enough to form a parallelepipedal or wedge-shaped packaging container, and is not fold formed after transversal sealing 32b. The packaging container will remain a pillow-shaped pouch-like container and be distributed and sold in this form.

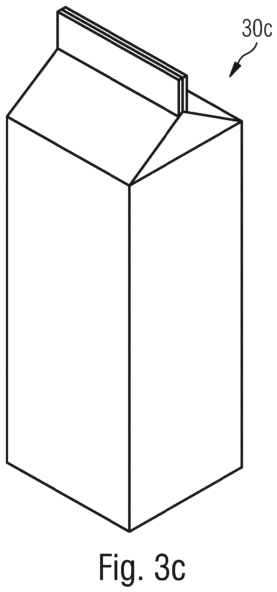

Fig. 3c shows a gable top package 30c, which is fold-formed from a pre-cut sheet or blank, from the laminated packaging material 10. Optionally an opening device and/or a pre-laminated hole (not shown) may be present. Also flat top packages may be formed from similar blanks of material.

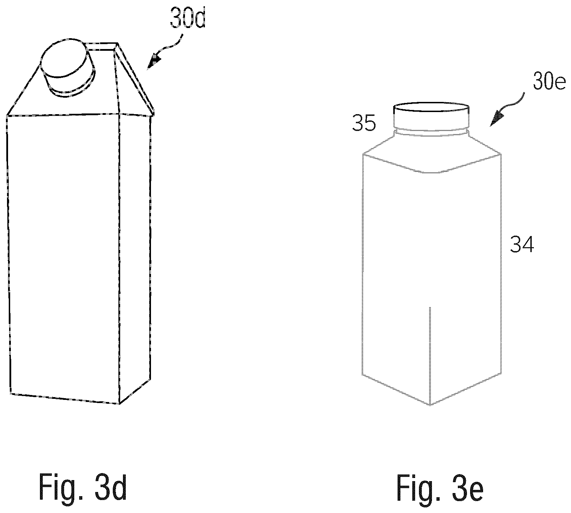

Fig. 3d shows an aseptic gable top-like package 30d, which is a variation of the packaging container 30a produced from a laminated packaging material 10 according to the invention. The top part is folded to form a gable top-like top. This type of package is for example marketed under the trade name of Tetra Gemina^{®}.

Fig. 3e shows a bottle-like package 30e, which is a combination of a sleeve 34 formed from a pre-cut blank of the laminated packaging material 10 of the invention, and a top 35, which is formed by injection moulding plastics in combination with an opening device such as a screw cork or the like. This type of package is for example marketed under the trade name of Tetra Top^{®}.

Fig. 4 shows the principle as described in the introduction of the present application, i.e. a web of packaging material from a reel as described in connection with Fig. 6 is formed into a tube 41 by overlapping the longitudinal edges 42, 42' of the web and heat sealing them to one another, to thus form an overlap joint 43. The tube is continuously filled 44 with the liquid food product to be filled and is divided into individual, filled packages by repeated, double transversal seals 45 of the tube at a pre-determined distance from one another below the level of the filled contents in the tube. The packages 46 are separated by cutting between the double transversal seals (top seal and bottom seal) and are finally shaped into the desired geometric configuration by fold formation along prepared crease lines in the material.

After use, the material in the packages may, in a simple manner and employing available techniques and equipment, readily be separated into its individual components, and in very pure form be recycled and re-used.

The inner layers (polymer-based) and outer layers (fibre-based) of the laminated packaging material of a packaging container are delaminated by the consumer after use, or at the appropriate time, when discarding and sorting the packaging container for recycling. To do this, the container is first flattened. Fig. 5 shows separation of the laminated packaging material of Fig. 1 between the releasable adhesive coating layer 12 and intermediate bonding layer 13 when peeled apart by hand. The consumer applies an outwards force at an area of weak adhesion 15. The outwards peeling force applied by the consumer's thumbs to separate the layers is shown schematically at 60.

Suitably, the outer layers go to UBC (used beverage carton) carton recycling and the inner layers are put in the polymer recycling bin by the consumer.

The fibre content of the packaging container (the paper or paperboard in the bulk layer of the laminated packaging material) may be recycled and be re-used in extremely pure form, using a repulper as described above. Containers with different arrangements of the areas of weak adhesion and features to assist with delamination are shown in Figs. 7 to 14, together with the steps of the delamination process. The areas of weak adhesion are shown schematically, and are not typically visible.

Fig. 7a-e show containers of the Fig. 3a or Fig. 4 brick type provided with areas of weak adhesion at opposite top and bottom corners of the laminated packaging material. Fig. 7a is a standard container, in which the top fin is directed away from the longitudinal seal. The area of weak adhesion is quarter-elliptical in shape and is on the top surface of the fin. Fig. 7b is a reversed fin container, in which the top fin is directed towards the longitudinal seal, so that the area of weak adhesion is in a protected position under the top fin. Figs 7c-e respectively show the steps of lifting the top flaps of the container of Fig. 7b, flattening the container and delamination starting at the corner with area of weak adhesion.

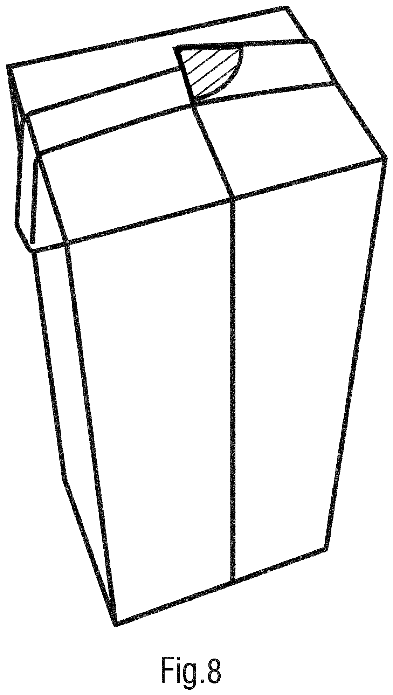

Fig. 8 shows a variant container design to that of Fig. 7, including a protruding tab in the transverse seal edge at the corner of the laminated packaging material with the area of weak adhesion. Such a tab may be formed by cutting a notch in the laminated packaging material in the filling machine, or by shaped cutting between transverse seals 45 as described in relation to Fig. 4. The protruding tab assists in engaging the corner to initiate delamination.

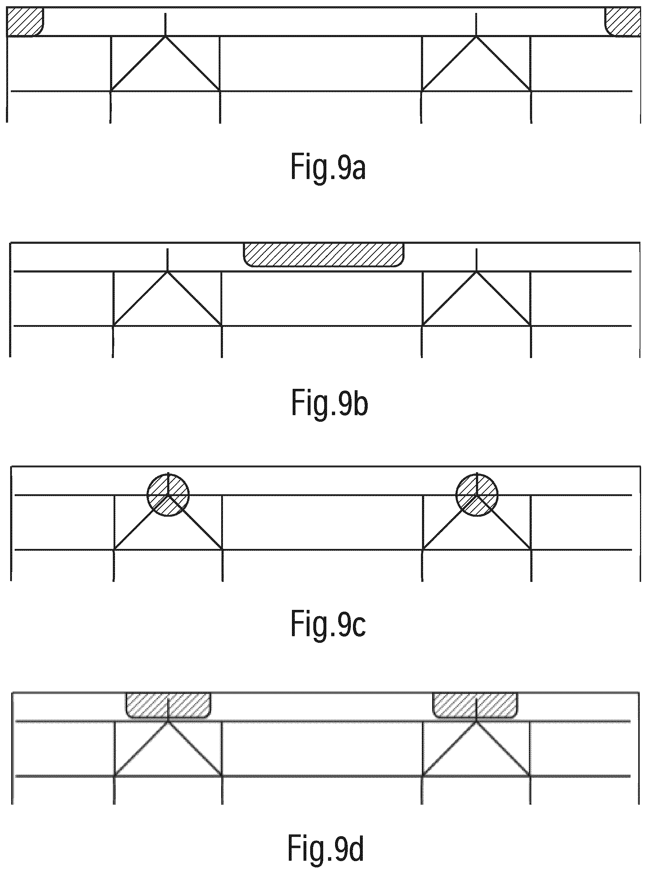

Fig. 9a-d show the top parts of each of three further variant container designs, with different positions for the area(s) of weak adhesion at or adjacent to the top edge. In Fig. 9a, there is a rectangular area of weak adhesion in the top fin across the top edge above the front panel. In Fig. 9b there are circular areas of weak adhesion around the top flap points. In Fig. 9c there are rectangular areas of weak adhesion in the top fin across the top flap points. Similar area(s) of weak adhesion at or adjacent to the bottom edge may alternatively or additionally be provided but are not shown here.

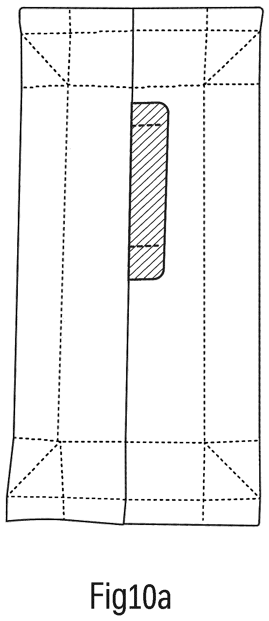

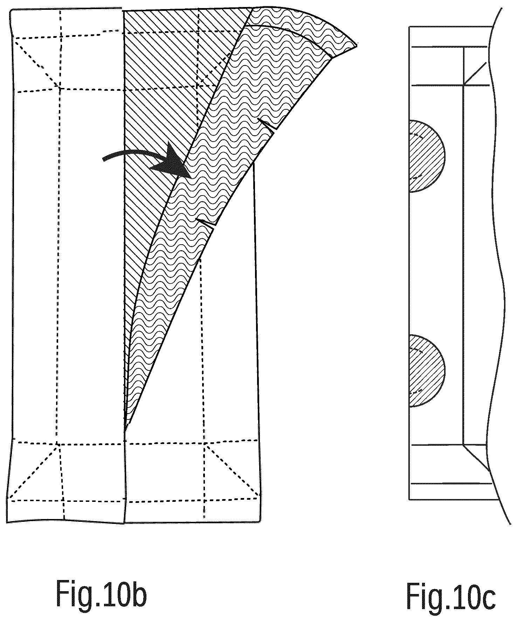

Figs. 10a-c show further variant container designs in which the area(s) of weak adhesion are at the longitudinal edge. Fig. 10a shows a flattened container with a rectangular area of weak adhesion at the longitudinal edge. The area of weak adhesion includes two perforated lines perpendicular to the longitudinal edge. These perforations are used by the consumer to lift a section of the outer layers of the laminated packaging material at the longitudinal edge, and thereby to initiate delamination, as shown in Fig. 10b. Fig. 10c shows the part of a variant container design adjacent to the longitudinal edge, in which there are two semi-circular areas of weak adhesion at the edge, each including two curved perforated lines concentric with the circle and extending a short distance inward from the edge.

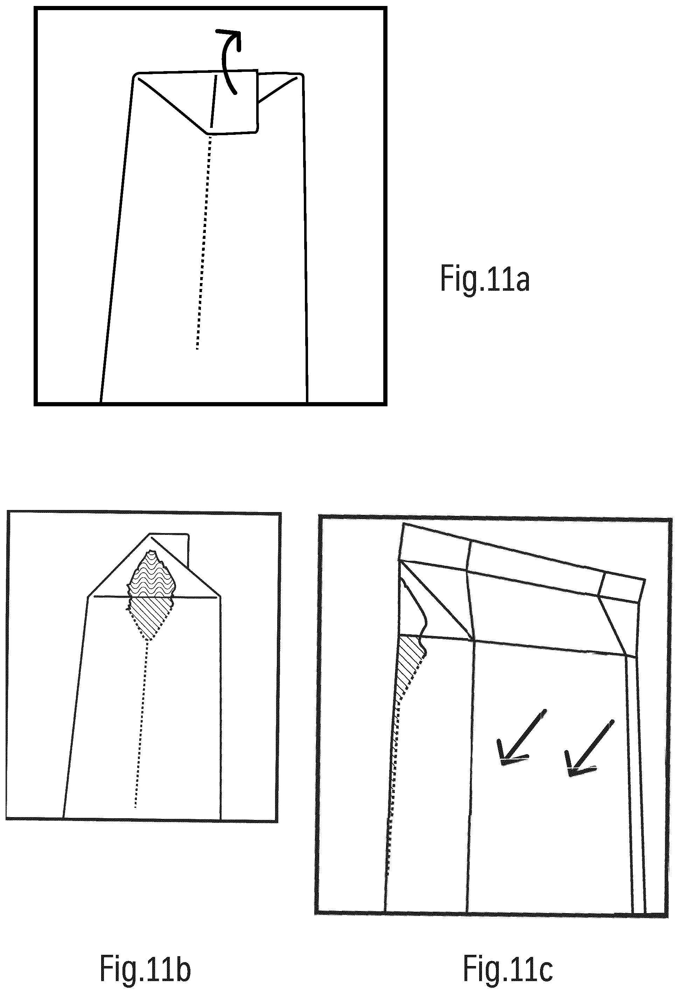

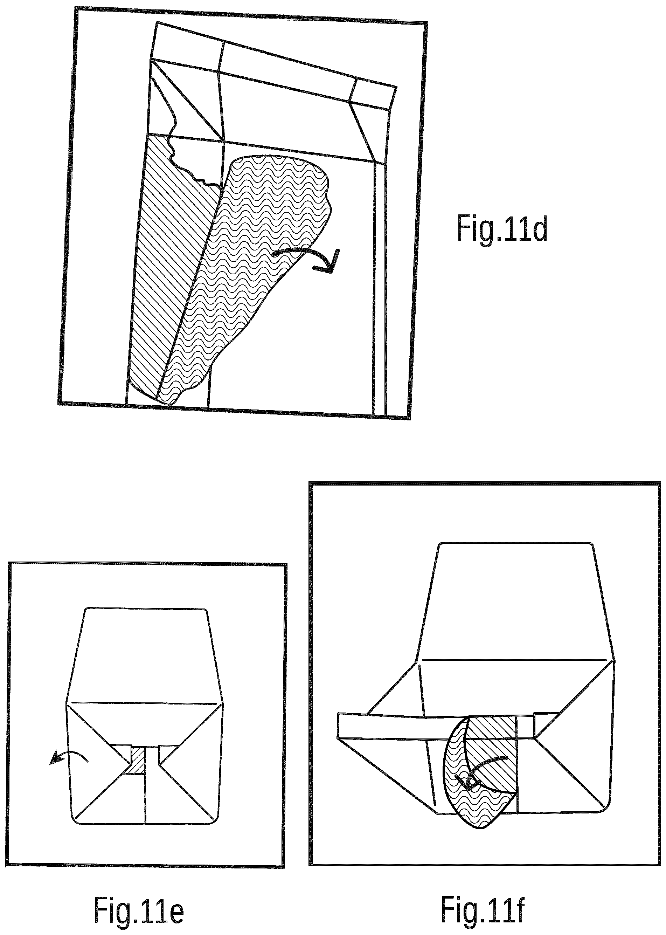

Fig. 11 relates to a variant container design where the area of weak adhesion is not at an edge or corner of the laminated packaging material, but rather is at the top flap seal. Fig. 11a shows lifting of the top flaps. Fig. 11b shows initiation of delamination under the top flap, where a triangular area of weak adhesion is provided, outlined by the top of a Y-shaped perforated line. The outer layers of the laminated packaging material remain adhered to the flap in this area when it is lifted, exposing the inner gas barrier layer. The consumer can then flatten the container along the vertical part of the perforated line, as shown in Fig. 11c. This assists with delamination, as the outer layers can be engaged along the flattened edge and peeled back, as shown in Fig. 11d. Fig. 11e shows the same principle applied to the bottom flaps, when bottom flap is lifted the delamination is initiated along the longitudinal seal as shown in Fig 11f.

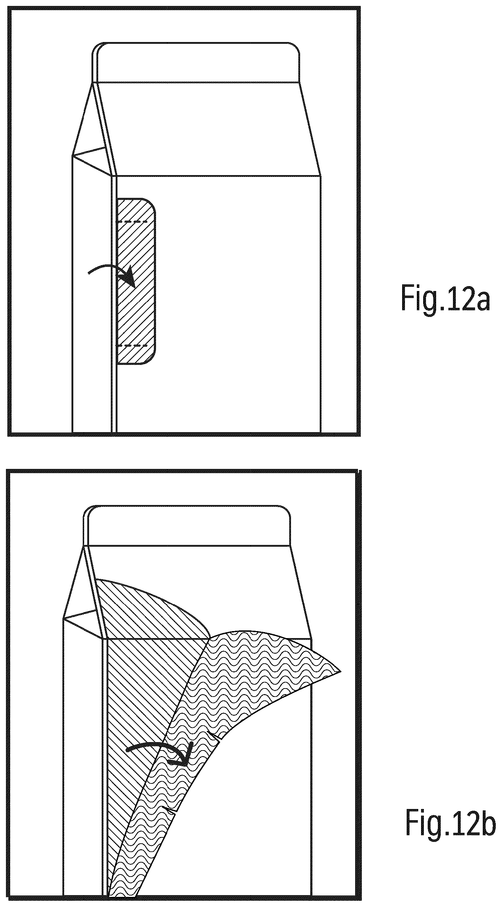

Fig. 12a-b show a gable-top container of the Fig. 3b type with a rectangular area of weak adhesion and perforations at the longitudinal edge, similar to the arrangement in the brick-shaped container of Fig. 10a.

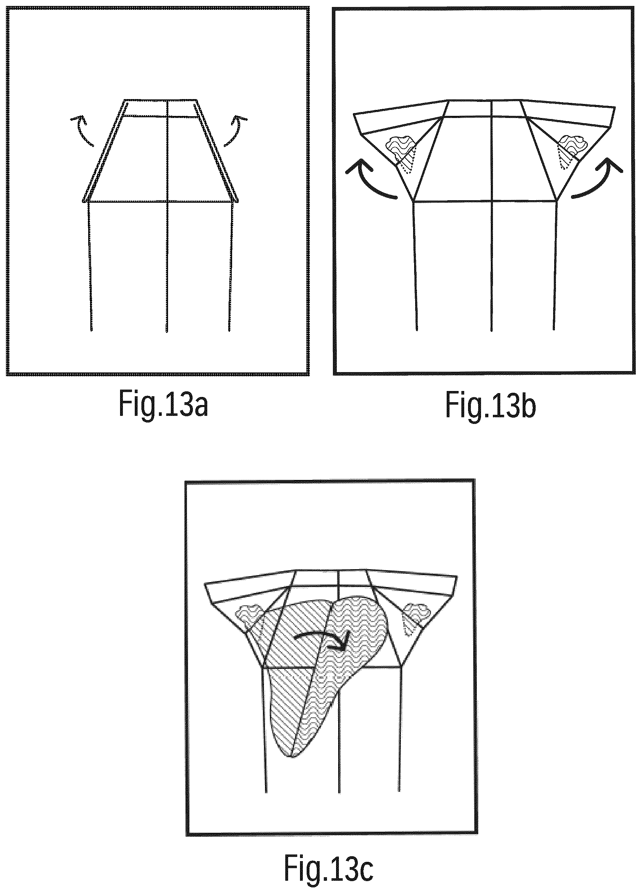

Fig. 13a-c show a Tetra Gemina^{®} container with an area of weak adhesion below the top flaps, similar to the arrangement in the brick-shaped container of Fig. 11a and 11b.

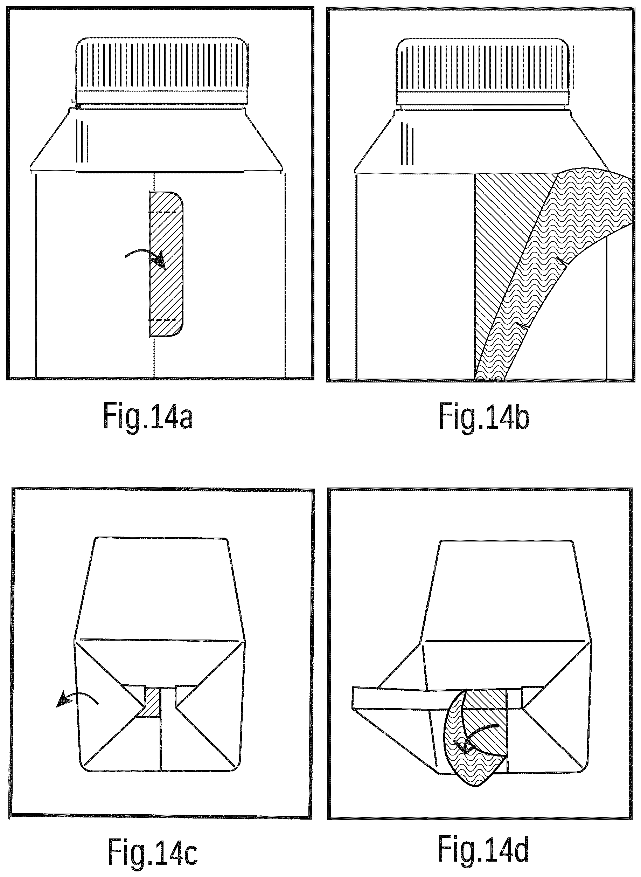

Fig. 14a shows a Tetra Top^{®} container with a rectangular area of weak adhesion and perforations at the longitudinal edge, and Fig. 14b shows initiation of delamination of the area, similar to the arrangement in the brick-shaped container of Fig. 10a and 10b, respectively. Fig. 14c shows the same principle applied to the bottom flaps, when bottom flap is lifted the delamination is initiated along the longitudinal seal as shown in Fig 14d.

In the preferred embodiments, various advantages are achieved:
- The inner layers go directly to the polymer/polyolefin recycling stream, saving time, energy and water in the repulping step.
- Faster repulping is achieved as it is carried out on the outer layers only, with the fibrous inner surface of the bulk material being initially exposed.
- Packaging containers can be formed using conventional filling machine settings.

As a final remark, the invention is not limited by the embodiments shown and described above but may be varied within the scope of the claims.

### List of reference numerals:

10 delaminable laminated packaging material
11 bulk layer
12 releasable adhesive coating
13 intermediate bonding layer
14 barrier layer
15 area of weak adhesion
16 outermost layer
18 tie layer
19 innermost layer
20 coating station
21 coating apparatus
22 hot air dryer
23 nip
24 laminated material
25 die
26 molten polymer curtain
27 roller nip
27a molten polymer curtain
27b die block
28 nip
28a molten polymer curtain
28b die
29 laminated packaging material
30a packaging container
30b pouch container
30c gable top package
30d aseptic gable top like package
30e bottle like package
31a longitudinal seal
31b longitudinal seal
32a transversal seal
32b transversal seal
33 opening device
34 sleeve
35 top
41 tube
42, 42' edges of web
43 overlap joint
44 filling of tube
45 double transversal seal
46 packages
60 peeling force

## Claims

1. A packaging container (30a; 30b; 30c; 30d; 30e) for liquid or semi-liquid food products, comprising a delaminable laminated packaging material (10), the laminated packaging material (10) comprising as layers of a layer sequence:
- an outermost protective material layer (16);
- a bulk layer (11) of paper or paperboard or other cellulose-based material;
- one or more inner layers (14, 19) including an innermost layer liquid tight material layer (19);
wherein the laminated packaging material (10) includes one or more areas of weak adhesion (15) between the bulk layer (11) and the inner layer(s) (14, 19) for initiation of delamination of the bulk layer (11) from the inner layer(s) (14, 19), and areas of stronger controlled adhesion between the bulk layer (11) and the inner layer(s) (14, 19).

2. A packaging container (30a; 30b; 30c; 30d; 30e) as claimed in Claim 1, wherein the areas of weak adhesion (15) occupy 5 % or less of the area of interface between the bulk layer (11) and the inner layer(s) (14, 19).

3. A packaging container (30a; 30b; 30c; 30d; 30e) as claimed in Claim 1 or Claim 2, wherein the inner layers include a gas barrier layer (14) bonded to the bulk layer (11).).

4. A packaging container (30a; 30b; 30c; 30d; 30e) as claimed in any one of the preceding claims, wherein at least one areas of weak adhesion (5) coincides with one or more edges and/or corners of the laminated packaging material (10).

5. A packaging container (30a; 30b; 30c; 30d; 30e) as claimed in any one of the preceding claims, wherein the packaging container (30a; 30b; 30c; 30d; 30e) includes a longitudinal seal edge (42, 42') and at least one area of weak adhesion (15) coincides with the longitudinal seal edge (42, 42').

6. A packaging container (30a; 30b; 30c; 30d; 30e) as claimed in any one of the preceding claims, wherein the packaging container (30a; 30b; 30c; 30d; 30e) as includes a top and/or bottom seal (45) and at least one area of weak adhesion (15) coincides with the top and/or bottom seal (45).

7. A packaging container (30a; 30b; 30c; 30d; 30e) as claimed in any one of the preceding claims, wherein at least one area of weak adhesion (15) is covered by a flap or fin.

8. A packaging container (30a; 30b; 30c; 30d; 30e) as claimed in any one of the preceding claims, wherein the packaging container (30a; 30b; 30c; 30d; 30e) includes at least one flap seal and at least one area of weak adhesion (15) coincides with the flap seal.

9. A packaging container (30a; 30b; 30c; 30d; 30e) as claimed in any one of the preceding claims, wherein the at least one area of weak adhesion (15) coincides with a weakness in the laminated packaging material (10).

10. A packaging container (30a; 30b; 30c; 30d; 30e) as claimed in Claim 9, wherein the weakness is a perforation, cut or crease.

11. A packaging container (30a; 30b; 30c; 30d; 30e) as claimed in any one of the preceding claims, wherein at least one area of weak adhesion (15) coincides with a discontinuity in an edge of the laminated packaging material (10).

12. A packaging container (30a; 30b; 30c; 30d; 30e) as claimed in any one of the preceding claims, wherein the one or more areas of weak adhesion (15) are substantially triangular, rectangular, circular, elliptical, semi-circular, semi-elliptical, quarter-circular and/or quarter-elliptical in shape.

13. A packaging container (30a; 30b; 30c; 30d; 30e) as claimed in any one of the preceding claims, wherein two or more areas of weak adhesion (15) are present.

14. A packaging container (30a; 30b; 30c; 30d; 30e) as claimed in any one of the preceding claims, wherein the packaging container (30a; 30b; 30c; 30d; 30e) is formed from blanks of laminated packaging material (10) or roll-fed laminated packaging material (29).

15. A packaging container (30a; 30b; 30c; 30d; 30e) as claimed in any one of the preceding claims, wherein the laminated packaging material (10) comprises a partial releasable adhesive coating (12), with non-coated areas corresponding to the areas of weak adhesion (15).

16. A packaging container (30a; 30b; 30c; 30d; 30e) as claimed in any one of the preceding claims, comprising at least a partial releasable adhesive coating (12) comprising a water-dispersible polymer selected from ethylene-vinyl acetate copolymer, acrylic copolymer, styrene-butadiene copolymer and ethylene-vinyl alcohol copolymer coated onto the inner surface of the bulk layer (11).

17. A packaging container (30a; 30b; 30c; 30d; 30e) as claimed in any one of the preceding claims, wherein the inner layer(s) (14) is bonded to the bulk layer (11) via the releasable adhesive coating (12) and optionally a further intermediate bonding layer (13) which preferably comprises polyolefin, more preferably polyethylene, most preferably LDPE.

18. A packaging container (30a; 30b; 30c; 30d; 30e) as claimed in any one of Claims 3 to 17, wherein the gas barrier layer (14) comprises aluminium foil; a barrier substrate and a barrier material layer; or a gas barrier polymer selected from polyamide and ethylene-vinyl alcohol co-polymer.

19. A delaminable laminated packaging material (10) suitable for forming a packaging container (30a; 30b; 30c; 30d; 30e) for liquid or semi-liquid food products as claimed in any one of the preceding claims, the laminated packaging material (10) comprising as layers of a layer sequence:
- an outermost protective material layer (16);
- a bulk layer (11) of paper or paperboard or other cellulose-based material;
- one or more inner layers (14, 19) including an innermost layer liquid tight material layer (19);
wherein the laminated packaging material (10) includes one or more areas of weak adhesion (15) between the bulk layer (11) and the inner layer(s) (14, 19) for initiation of delamination of the bulk layer (11) from the inner layer(s) (14, 19) and areas of stronger controlled adhesion between the bulk layer (11) and the inner layer(s) (14, 19).

20. A method of making a delaminable laminated packaging material (10) as claimed in Claim 19 comprising the steps of:
- laminating the bulk layer (11) to at least one inner layer (14); and
- applying the outermost (16) and innermost (19) material layers, and optionally at least one further inner layer.

21. A method of making a delaminable laminated packaging material (10) as claimed in Claim 20, further comprising an initial step of partially coating the inner surface of the bulk layer (11) with a releasable adhesive coating (12), such that non-coated areas form the one or more areas of weak adhesion (5) on laminating the bulk layer (11) to the at least one inner layer (14) and coated areas form the areas of stronger controlled adhesion.

22. A method of making a delaminable laminated packaging material (10) as claimed in Claim 21, wherein the initial coating step comprises coating the inner surface of the bulk layer (11) with an aqueous dispersion or solution comprising a water-dispersible polymer to form the dried releasable adhesive coating (12).

23. A method of making a packaging container (30a; 30b; 30c; 30d; 30e) as claimed in any one of Claims 1 to 18.

24. A method as claimed in Claim 23 of making a packaging container (30a; 30b; 30c; 30d; 30e),wherein the method comprises a step of heat treatment of the laminated packaging material (10) to form the area(s) of weak adhesion (5).

25. A method of recycling a packaging container (30a; 30b; 30c; 30d; 30e) as claimed in any one of Claims 1 to 18 or a laminated packaging material (10) as claimed in Claim 19, comprising repulping of the laminated packaging material (10), or a portion thereof.

26. A method as claimed in Claim 25, wherein repulping is carried out on the outer layers of the delaminated laminated packaging material (10) following delamination from the inner layers.
